# EUROPÄISCHE PATENTSCHRIFT

(11) **EP 0 726 725 B1**
(45) Veröffentlichungstag und Bekanntmachung des Hinweises auf die Patenterteilung: **22.04.1998**
(21) Anmeldenummer: 95904479.3
(22) Anmeldetag: 15.12.1994
(51) Int. Cl.: A47J 43/27, A47G 19/22

(54) **TRINKGEFÄSS**
DRINKING VESSEL
RECIPIENT POUR BOIRE

(30) Priorität: 17.12.1993 DE 4343212
(43) Veröffentlichungstag der Anmeldung: 21.08.1996
(73) Patentinhaber: Schindlegger, Walter, A-3353 Seitenstetten (AT)
(72) Erfinder: Schindlegger, Walter, A-3353 Seitenstetten (AT)
(74) Vertreter: Haft, von Puttkamer, Berngruber, Czybulka
(86) Internationale Anmeldenummer: EP9404168
(87) Internationale Veröffentlichungsnummer: WO9516380

(56) Entgegenhaltungen:
- EP-A- 0 561 310
- FR-A- 1 261 346
- FR-A- 2 492 246
- GB-A- 2 134 804

## Beschreibung

Die Erfindung bezieht sich auf ein Trinkgefäß mit einem Rührer mit einem Unterteil mit einem Rührermotor und einem Schalter und einem mit dem Unterteil lösbar verbindbaren Aufsatz.

Ein solches Trinkgefäß ist aus EP 0 562 310 A1 bekannt.

Aufgabe der Erfindung ist es, das bekannte Trinkgefäß zu vereinfachen und zugleich dessen Rührwirkung zu verbessern. Dies wird erfindungsgemäß mit dem im Anspruch 1 gekennzeichneten Trinkgefäß erreicht. In den Unteransprüchen sind vorteilhafte Ausgestaltungen der Erfindung wiedergegeben.

Nachstehend ist eine Ausführungsform des erfindungsgemäßen Trinkgefäßes anhand der Zeichnung näher erläutert. Darin zeigen:
Fig. 1 eine Explosionsdarstellung des Trinkgefäßes;
Fig. 2 einen Schnitt durch den unteren Bereich des Aufsatzes und den Dichtring;
Fig. 3 eine Ansicht auf das Unterteil von unten;
Fig. 4 einen Schnitt entlang der Linie IV-IV in Fig. 3;
Fig. 5 einen Schnitt entlang der Linie V-V in Fig. 2;
Fig. 6 eine Seitenansicht des Rührwerkzeugs; und
Fig. 7 einen Schnitt durch die Tasterkappe in vergrößerter Wiedergabe.

Danach besteht das Trinkgefäß aus einem einstückigen Unterteil 1 und einem becher- oder zylinderförmigen Aufsatz 6. Das Unterteil 1 ist ein Kunststoffspritzgußteil. Der Aufsatz 6 besteht aus Glas oder Acrylglas. Das Unterteil 1 weist eine zylindrische Umfangswand 2 auf und ist nach oben durch eine obere Wand abgeschlossen. Zwischen der Umfangswand 2 und dem plattenförmigen Abschnitt 12 in der Mitte der oberen Wand weist die obere Wand eine Ringnut 3 auf. An der Unterseite der oberen Wand ist ein mittlerer Ansatz 4 angeordnet, der den Rührermotor 5 aufnimmt (Fig. 5). Der Aufsatz 6 greift mit seiner Unterkante in die Ringnut 3 ein.

Zur lösbaren Verbindung des Aufsatzes 6 mit dem Unterteil 1 sind an der Außenseite der Ringnut 3 z. B. zwei Klauen 7 vorgesehen, desgleichen zwei Klauen 8 an der unteren Kante des Aufsatzes 6. Die Klauen 8 sind zwischen die Klauen 7 an der Ringnut 3 steckbar und werden von den Klauen 7 an der Ringnut 3 übergriffen, wenn der Aufsatz 6 gegenüber dem Unterteil 1 verdreht wird.

Die Klauen 7 an der Ringnut 3 weisen in Drehrichtung eine sich schräg nach unten erstreckende Unterseite auf, und die Klauen 8 an dem Aufsatz 6 eine Oberseite, die sich entsprechend der Neigung der Unterseite der Klauen 7 in Drehrichtung schräg nach oben erstreckt. Beim Verdrehen wird der Aufsatz 6 mit seiner Unterkante damit in die Ringnut 3 gedrückt, wenn er mit dem Unterteil verbunden wird.

An der Innenseite der Ringnut 3 ist ein sich nach unten konisch erweiternder Gummi-Dichtring 9 vorgesehen, an dem sich eine komplementär erweiternde konische Dichtfläche 10 an der unteren Kante des Aufsatzes 6 abstützt. Wenn der Aufsatz 6 gegenüber dem Unterteil verdreht wird, wird damit die Dichtfläche 10 fest gegen den Dichtring 9 gepreßt und der Dichtring 9 fest gegen das Unterteil 1. Statt des konischen Dichtrings 9 kann die Platte 12 des Unterteils 1 mit einer Dichtfläche aus einem gummielastischen Material versehen sein, wobei statt der konischen Dichtfläche 10 eine Ringschulter im Aufsatz 6 angebracht ist, die sich auf der Dichtfläche auf der Platte 12 abstützt.

Der Aufsatz 6 ist von der oberen Kante der Dichtfläche 10 zu seiner zylindrischen Umfangswand 11 konkav gewölbt ausgebildet. Die Platte 12 des Unterteils 1 schließt mit ihrer Oberseite bündig mit der oberen Kante der Dichtfläche 10 ab.

Bei Umlauf des auf die Rührerwelle 13 gestreckten Rührwerkzeugs 14 wird damit eine starke Strömung entlang der Umfangswand 11 erzeugt, die die Mischwirkung erhöht.

Die Rührerwelle 13, die zugleich die Motorwelle ist, kann gegenüber der Ringnut 3 exzentrisch angeordnet sein. Damit wird eine schräge umlaufende Oberfläche der Flüssigkeit im Aufsatz 6 bei umlaufendem Rührer erzeugt, wodurch im Bereich der Flüssigkeitsoberfläche an der Innenwand haftendes Material weggespült wird, das von dem durch das Rührwerkzeug 14 erzeugten Strudel nach unten gesaugt wird..

Als besonders wirksam hat sich das in Fig. 6 dargestellte Rührwerkzeug 14 erwiesen, das aus einem herzförmigen Bügel besteht, der mit seinem unteren Herzabschnitt einstückig mit dem Verbindungsabschnitt 15 verbunden ist und im Herzeinschnitt eine kugelförmige Verdickung 16 aufweist. Durch die Verdickung 16 wird der Bügel 14 beim Umlauf zentriert. Der Abschnitt 15 weist eine Längsbohrung 41 auf, mit der das Rührwerkzeug 14 auf die Rührerwelle 13 gesteckt wird.

Zur Abdichtung der Rührerwelle 13 ist ein Dichtring 17 aus Gummi vorgesehen, der aus einem Bund 18 und einem kegelwandförmigen Abschnitt 19 besteht. Mit dem Bund 18 ist die Dichtung in einer Ringnut 20 an der Unterseite des Verbindungsabschnitts 15 fixiert. Der flexible Abschnitt 19 schleift bei umlaufendem Rührerwerkzeug 14 auf der Platte 12. Stattdessen kann auf die Rührerwelle 13 (Fig. 5) ein Dichtring gesteckt sein, der in der Ausnehmung 23 um die Rührerwelle 13 in der Platte 12 angeordnet ist.

Der mittlere Ansatz 4 zur Aufnahme des Motors 5 besteht aus einer den Motor 5 umschließenden Wandung (Fig. 3). Zwei gegenüberliegende Wände der Wandung bilden federnde Klauen 21, die der Motor 5 halten und gegen die obere Wand des Unterteils 1 zeihen. Die Klauen 21 greifen in Ausnehmungen 44 im Motorgehäuse ein (Fig. 4).

Gemäß Fig. 4 und 5 ist ein Dichtring 22 um die Rührerwelle 13 in einer ringförmigen Ausnehmung 23 an der Unterseite der oberen Wand des Unterteils 1 vorgesehen.

In einer kreisförmigen Öffnung 24 in der Umfangswand 2 des Unterteils 1 sitzt die Tasterkappe 25 eines Schalters zur Betätigung des Motors 5.

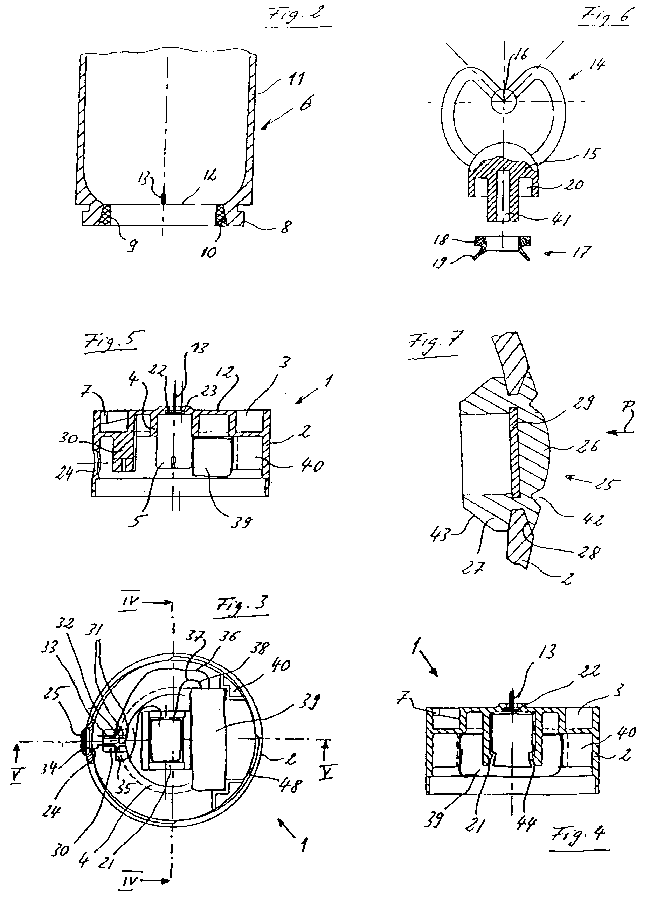

Wie insbesondere aus Fig. 7 ersichtlich, ist die Tasterkappe 25 einstückig ausgebildet. Sie besteht aus einem gummielastischen Material, z. B. Silicongummi. Die Tasterkappe 25 weist einen Druckpunktabschnitt 26 auf und einen den Druckpunktabschnitt 26 umgebenden ringförmigen Halteabschnitt 27, der vom Druckpunktabschnitt 26 durch eine Nut 42 an der Außenseite getrennt ist.

Im Haltering 27 ist eine Umfangsnut 28 vorgesehen, in die die Umfangswand 2 mit ihrer Kante an der Öffnung 24 eingreift. Um die Tasterkappe 25 von außen in die Öffnung 24 drücken zu können, verjüngt sich der Haltering 27 an seiner Innenseite 43 konisch nach innen.

An der Innenseite des Druckpunktabschnitts 26 ist eine Kontaktplatte 29 aus Metall befestigt.

An der Unterseite der oberen Wand des Unterteils 1 ist gegenüber der Kontaktplatte 29 ein mit dem Unterteil 1 einstückig ausgebildeter zapfenförmiger Ansatz 30 angeordnet. Der Ansatz 30 weist an seiner Unterseite zwei sich in Druckrichtung gemäß dem Pfeil P erstreckende Längsnuten 31 auf, in denen jeweils von außen eine Quernut 32 führt. In jede Längsnut 31 mit zugehöriger Quernut 32 ist jeweils eine Kontaktbrücke gelegt, die aus einem entsprechenden winkelförmigen Drahtstück 33 besteht. Das eine Ende 34 jedes Drahtstücks 33, das aus der Längsnut 31 ragt, ist mit der Kontaktplatte 29 in Kontakt bringbar, wenn der Druckpunktabschnitt 26 gemäß dem Pfeil P gedrückt wird.

An das andere Ende 35 jedes Drahtstücks 33 ist ein Kabel 36, 37 angeschlossen, das zu einem Akku 39 bzw. zum Motor 5 führt. Ein weiteres Kabel 38 führt vom Akku 39 direkt zum Motor. Wenn auf den Druckpunktabschnitt 26 entsprechend dem Pfeil P gedruckt wird, verbindet die Kontaktplatte 29 die Enden 34 der beiden Drahtstücke 33 miteinander, wodurch der Motor 5 in Betrieb gesetzt wird.

Der Akku 39 ist zwischen zwei mit der Umfangswand 2 einstückig ausgebildeten stufenförmigen Ansätzen 40 und der Aufnahme 4 für den Motor 5 eingeklemmt.

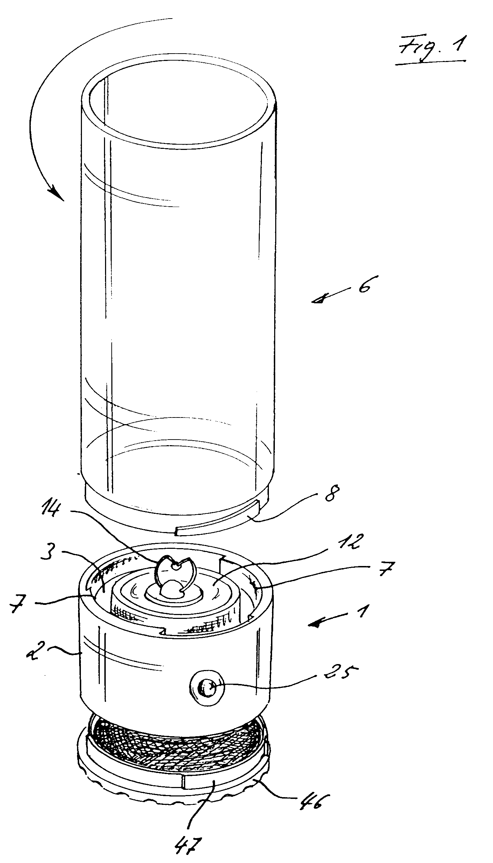

An seiner Unterseite ist das Unterteil 1 mit einer Bodenplatte 46 verschließbar. Die Bodenplatte 46 ist gemäß Fig. 1 am Rand mit keilförmigen Dichtflächen 47 versehen, die mit entsprechenden Dichtflächen 48 am Innenumfang des Unterteils 1 zusammenwirken (Fig. 3). Das erfindungsgemäße Trinkgefäß kann auch als Babysaugflasche ausgebildet sein.

Das Unterteil 1 einschließlich das Ansatzes 4 für den Motor 5, des Ansatzes 30 für die Kontaktbrücken 33 und de Ansätze 40 zur Halterung des Akkus 39 besteht aus einem einzigen Kunststoffspritzteil.

Der Außendurchmesser der zylindrischen Unterteils 1 und des Aufsatzes 6 ist gleich groß.

Statt des Akku 39 kann auch eine Batterie vorgesehen sein. So können sich z. B. zwei 1,5 V-Batterien entlang der beiden Seiten des Motors 5 erstrecken, und zwar parallel zur Druckrichtung P des Tasters 25. Die beiden Batterien sind mit Kontaktfahnen versehen, die einander überlappen und bei Betätigung des Tasters in Berührung gebracht werden. Der Taster ist dann so ausgebildet, daß die Kontaktplatte 29 entfällt und der Abschnitt 27 gegen die Kontaktfahnen drückt.

## Patentansprüche

1. Trinkgefäß mit einem Rührer aus einem als einstückiges Kunststoffteil ausgebildeten Unterteil (1), welches einen mittleren Ansatz (4) zur Aufnahme eines Rührermotors (5) und eine Umfangswand (2) mit einem Schalter aufweist, und aus einem mit dem Unterteil (1) lösbar verbindbaren Aufsatz (6), dadurch gekennzeichnet, daß das Unterteil (1) eine obere Wand (12), durch die sich die Welle (13) des Rührers erstreckt, und um die obere Wand (12) eine Ringnut (3) aufweist, in die der Aufsatz (6) mit seiner Unterkante zur lösbaren Verbindung eingreift, daß in einer Ausnehmung (23) an der Unterseite der oberen Wand (12) ein Dichtring (22) vorgesehen ist, und daß einstückig mit der oberen Wand (12) ausgebildete Klauen (21) vorgesehen sind, die den Rührermotor (5) halten und ihn gegen die obere Wand (12) ziehen.

2. Trinkgefäß nach Anspruch 1, dadurch gekennzeichnet, daß zur lösbaren Verbindung an der Außenseite der Ringnut (3) und der unteren Kante des Aufsatzes (6) jeweils Klauen (7, 8) angeordnet sind, wobei die Klauen (8) an dem Aufsatz (6) zwischen die Klauen (7) an der Ringnut (3) steckbar sind und durch Verdrehen von den Klauen (7) an der Ringnut (3) übergriffen werden.

3. Trinkgefäß nach Anspruch 2, dadurch gekennzeichnet, daß die Klauen (7) an der Ringnut (3) und/oder die Klauen (8) an dem Aufsatz eine sich in Umfangsrichtung schräg nach unten bzw. oben erstreckende Unterseite bzw. Oberseite besitzen, so daß der Aufsatz (6) beim Verdrehen in die Ringnut (3) gedrückt wird.

4. Trinkgefäß nach Anspruch 3, dadurch gekennzeichnet, daß an der Innenseite der Ringnut (3) ein sich nach unten konisch erweiternder Dichtring (9) vorgesehen ist, an dem eine sich entsprechend erweiternde Dichtfläche (10) an der unteren Kante des Aufsatzes (6) anliegt.

5. Trinkgefäß nach Anspruch 4, dadurch gekennzeichnet daß der Aufsatz (6) von der oberen Kante der Dichtfläche (10) zu seiner Umfangswand (11) konkav gewölbt ausgebildet ist.

6. Trinkgefäß nach Anspruch 1, dadurch gekennzeichnet, daß die obere Wand (12) bündig mit der oberen Kante der Dichtfläche (10) des Aufsatzes (6) abschließt.

7. Trinkgefäß nach einem der vorstehenden Ansprüche, dadurch gekennzeichnet, daß die Rührerwelle (13) exzentrisch angeordnet ist.

8. Trinkgefäß nach einem der vorstehenden Ansprüche, dadurch gekennzeichnet, daß das Rührwerkzeug als herzförmiger Bügel (14) ausgebildet ist, der mit seinem unteren Herzabschnitt mit einem auf die Rührerwelle (13) steckbaren Verbindungsabschnitt (15) einstückig verbunden ist und im Herzeinschnitt eine Verdickung (16) aufweist.

9. Trinkgefäß nach einem der vorstehenden Ansprüche, dadurch gekennzeichnet, daß der mittlere Ansatz (4) zur Aufnahme des Motors (5) aus einer dem Motor (5) umschließenden Wandung besteht.

10. Trinkgefäß nach einem der vorstehenden Ansprüche, dadurch gekennzeichnet, daß der Schalter eine einstückig ausgebildete, in einer Öffnung (24) in der Umfangswand (2) angeordnete Tasterkappe (25) aus gummielastischem Kunststoff aufweist, die einen Druckpunkt-Abschnitt (26), einen den Druckpunkt-Abschnitt (26) umgebenden Halteabschnitt (27) mit einer Umfangsnut (28), in der die Kante an der Öffnung (24) der Umfangswand (2) eingreift, und zwischen Druckpunkt-Abschnitt (26) und Halteabschnitt (27) an der Außenseite eine Ringnut (42) aufweist.

11. Trinkgefäß nach einem der vorstehenden Ansprüche, dadurch gekennzeichnet, daß die Stromquelle eine Batterie oder ein Akku (39) ist, wobei die Batterie oder der Akku (39) zwischen zwei mit der Umfangswand (2) einstückig ausgebildeten Ansätzen (40) und den Ansatz (4) für den Motor (5) steckbar ist.

12. Trinkgefäß nach einem der vorstehenden Ansprüche, dadurch gekennzeichnet, daß das Unterteil (1) an seiner Unterseite mit einer Bodenplatte (46) verschließbar ist.

## Claims

1. Drinking vessel having a stirrer, which consists of a base (1) being a monolithic plastic component having a central boss (4) for mounting the stirrer motor (5) and a lateral wall (2) with a switch, and of a top (6) being detachably connected to the base (1), characterized in that the base (1) has an upper wall (12) being penetrated by the stirrer shaft (13), the upper wall (12) having an annular groove (3) in which the lower edge of the top (6) detachably engages, that a sealing ring (2) is provided in a recess (23) in the underside of the upper wall (12), and that the upper wall (12) is provided with integral lugs (21) which hold the stirrer motor (5) and pull it against the upper wall (12).

2. Drinking vessel per claim 1, characterized in that for providing a detachable connection lugs (7, 8) are provided on the outside of the annular groove (3) and the lower edge of the top (6), where said lugs (8) on said top (6) may be inserted between said lugs (7) on said annular groove (3) and will be clamped by said lugs (7) on said annular groove (3) when rotated.

3. Drinking vessel per claim 2, characterized in that said lugs (7) on said annular groove (3) and/or said lugs (8) on said top have upper surfaces/lower surfaces, respectively, that slope downward/upward, respectively, around the circumferences of said annular groove/top, respectively, such that said top (6) will be forced into said annular groove (3) when rotated.

4. Drinking vessel per claim 3, characterized in that the inner side of said annular groove (3) has a tapered sealing ring (9) that progessively increases in width toward its base and abuts against a correspondingly beveled sealing surface (10) on said lower edge of said top (6).

5. Drinking vessel per claim 4, characterized in that said top (6) is concavely curved from the top edge of said sealing surface (10) to its lateral wall (11).

6. Drinking vessel per claim 1, characterized in that the upper wall (12) is flush with the upper edge of said sealing surface (10) of said top (6).

7. Drinking vessel per any of the preceding claims, characterized in that said stirrer shaft (13) is offset from the centerline.

8. Drinking vessel per any of the preceding claims, characterized in that its stirring tool is in the form of a heart-shaped bail (14) whose pointed lower end is joined to a connecting section (15) that slips onto its stirer shaft (13) to form a single unit, and whose cleft exhibits a protrusion (16).

9. Drinking vessel per any of the preceding claims, characterized in that said central boss (4) for mounting said motor (5) consists of a wall encircling said motor (5).

10. Drinking vessel per any of the preceding claims, characterized in that its switch has an actuating pushbutton (25) fabricated as a single unit from a highly flexible plastic having an actuation-indicator section (26), an annular detenting section (27) surrounding said actuation-indicator section (26) having a groove (28) that is engaged by the edge of an aperture (24) in said lateral wall (2), and an annular groove (42) between said actuation-indicator section (26) and said detenting section (27) situated at the outside.

11. Drinking vessel per any of the preceding claims, characterized in that its electrical supply is provided by a nonrechargeable battery or a rechargeable battery (39), said nonrecharchable battery or recharchable battery may be inserted between two lugs (40) molded into said lateral wall (2) and said boss (4) accommodating said motor (5).

12. Drinking vessel per any of the preceding claims, characterized in that the bottom of the base (1) may be closed off by a baseplate (46).

## Revendications

1. Récipient à boire comportant un agitateur, constitué par une partie inférieure (1) réalisée d'une seule pièce en matière plastique, qui présente une embase (4) médiane destinée à recevoir un moteur d'agitateur (5), et une paroi périphérique (2) comportant un commutateur, et par un gobelet rapporté (6) reliable de manière détachable avec la partie inférieure (1), caractérisé en ce que la partie inférieure (1) présente une paroi supérieure (12) à travers laquelle s'étend l'arbre (13) de l'agitateur, et autour de la paroi supérieure (12), une gorge annulaire (3) dans laquelle s'engage le gobelet rapporté (6) avec son bord inférieur pour établir la liaison détachable, en ce qu'il est prévu un joint d'étanchéité (22) dans un évidement (23) sur la face inférieure de la paroi supérieure (12), et en ce qu'il est prévu des griffes (21) réalisées d'une seule pièce avec la paroi supérieure (12), qui retiennent le moteur d'agitateur (5) et qui le tirent contre la paroi supérieure (12).

2. Récipient à boire selon la revendication 1, caractérisé en ce que pour établir la liaison détachable, des griffes (7, 8) respectives sont prévues sur la face extérieure de la gorge annulaire (3) et sur le bord inférieur du gobelet rapporté (6), les griffes (8) étant susceptibles d'être entichées sur le gobelet rapporté (6) entre les griffes (7) situés sur la gorge annulaire (3) et étant enserrées par rotation par les griffes (7) situées sur la gorge annulaire (3).

3. Récipient à boire selon la revendication 2, caractérisé en ce que les griffes (7) situées sur la gorge annulaire (3) et/ou les griffes (8) situées sur le gobelet rapporté possèdent des parties inférieure et supérieure s'étendant en direction périphérique en pente vers le bas et vers le haut, respectivement, de sorte que le gobelet rapporté (6) est pressé à la rotation dans la gorge annulaire (3).

4. Récipient à boire selon la revendication 3, caractérisé en ce qu'il est prévu sur la face intérieure de la gorge annulaire (3) un joint d'étanchéité (9) s'élargissant de manière conique vers le bas, sur lequel repose une surface d'étanchéité (10) s'élargissant de manière correspondante sur le bord inférieur du gobelet rapporté (6).

5. Récipient à boire selon la revendication 4, caractérisé en ce que le gobelet rapporté (6) est réalisé de forme bombée concave depuis le bord supérieur de la surface d'étanchéité (10) vers sa paroi périphérique (11).

6. Récipient à boire selon la revendication 1, caractérisé en ce que la paroi supérieure (12) se termine à fleur du bord supérieur de la surface d'étanchéité (10) du gobelet rapporté (6).

7. Récipient à boire selon l'une quelconque des revendications précédentes, caractérisé en ce que l'arbre de l'agitateur (13) est agencé excentrique.

8. Récipient à boire selon l'une quelconque des revendications précédentes, caractérisé en ce que l'outil de l'agitateur est réalisé sous la forme d'un étrier (14) en forme de coeur qui est relié par son tronçon de coeur inférieur d'une seule pièce avec un tronçon de liaison (15) enfichable sur l'arbre de l'agitateur (13) et présente un renflement (16) dans le creux du coeur.

9. Récipient à boire selon l'une quelconque des revendications précédentes, caractérisé en ce que l'embase médiane (4) destinée à recevoir le moteur (5) est constituée par une paroi entourant le moteur (5).

10. Récipient à boire selon l'une quelconque des revendications précédentes, caractérisé en ce que le commutateur présente un capuchon-poussoir (25) en matière plastique élastique réalisé d'une seule pièce et agencé dans une ouverture (24) dans la paroi périphérique (2), qui présente un tronçon de point de pression (26), un tronçon de retenue (27) entourant le tronçon de point de pression (26), avec une gorge périphérique (28) dans laquelle s'engage le bord sur l'ouverture (24) de la paroi périphérique (2), et une gorge annulaire (42) sur la face extérieure, entre le tronçon de point de pression (26) et le tronçon de retenue (27).

11. Récipient à boire selon l'une des revendications précédentes, caractérisé en ce que la source de courant est une pile ou un accumulateur (39), la pile ou l'accumulateur (39) étant enfichable entre deux embases (40) réalisées d'une seule pièce avec la paroi périphérique (2) et l'embase (4) pour le moteur (5).

12. Récipient à boire selon l'une des revendications précédentes, caractérisé en ce que la partie inférieure (1) est susceptible d'être fermée sur sa face inférieure par une plaque de fond (46).
